Europäisches Patentamt

European Patent Office

Office européen des brevets

(19)

(11) Veröffentlichungsnummer : **0 103 229**
B1

(12) # EUROPÄISCHE PATENTSCHRIFT

(45) Veröffentlichungstag der Patentschrift :
12.11.86

(51) Int. Cl.⁴ : **G 01 B 5/04// D06H3/02**

(21) Anmeldenummer : **83108509.7**

(22) Anmeldetag : **30.08.83**

(54) **Vorrichtung zum kontinuierlichen Längenmessen von Bahnen aus Textil, Papier oder Kunststoff.**

(30) Priorität : 14.09.82 DEU 8226156

(43) Veröffentlichungstag der Anmeldung :
21.03.84 Patentblatt 84/12

(45) Bekanntmachung des Hinweises auf die Patenterteilung : 12.11.86 Patentblatt 86/46

(84) Benannte Vertragsstaaten :
**AT BE CH DE FR GB IT LI SE**

(56) Entgegenhaltungen :
DE-A- 1 548 271
DE-A- 1 635 448
DE-A- 2 237 049
DE-A- 2 446 128
DE-C- 191 150
DE-C- 523 093
GB-A- 939 198

(73) Patentinhaber : **Firma Konrad Unglaub vorm. Georg Kiessling**
**Birkenstrasse 9**
**D-8662 Helmbrechts (DE)**

(72) Erfinder : **Junge, Otto**
**Orterweg 34**
**D-8662 Helmbrechts (DE)**

(74) Vertreter : **Voigt, Günter, Dipl.-Ing.**
**Patentanwälte Dr.-Ing. Alfred Schulze, Dipl.-Ing. Günter Voigt & Partner Nordring 152, Postfach 210104**
**D-8500 Nürnberg 21 (DE)**

EP 0 103 229 B1

## Beschreibung

Die Erfindung bezieht sich auf eine Vorrichtung zum kontinuierlichen Längenmessen von oberflächenempfindlichen Bahnen aus Textil, Papier oder Kunststoff gemäß Oberbegriff des Anspruchs 1 (siehe DE-A1-24 46 128).

Derartige Längenmeßgeräte werden beispielsweise in Verbindung mit Stofflängen-Meßmaschinen angewendet, die in der Textil- und Bekleidungsindustrie Verwendung finden. Die bekannten Vorrichtungen zum kontinuierlichen Messen von Bahnen sind so aufgebaut, daß die zu messende Bahn im Bereich des Meßtisches zwischen zwei Rollen oder Walzen hindurchgeführt wird, von denen die eine das Meßrad des Meßgerätes darstellt, das beispielsweise einen in Meter geeichten Zähler antreibt, während die andere — meist unter Federdruck stehend — die Bahn gegen das Meßrad drückt, um den Schlupf so gering wie möglich zu halten. Es ist auch bekannt, anstelle des Rades oder der Walze zum Andrücken der Bahn an das Meßrad ein endloses Gegendruckband zu verwenden, wodurch eine Anlage über eine größere Strecke der Bahn erreicht wird.

So ist beispielsweise aus der DE-C-523 093 eine Warenschaumaschine bekannt, bei der eine Druckrolle i vorhanden ist, mit der der Stoff in an sich bekannter Weise durch das Eigengewicht dieser Druckrolle mit den Meßrädern in Berührung gehalten wird. Durch die Einwirkung der Druckrolle werden jedoch oberflächenempfindliche Bahnen wie etwa Plüsch, Flor, Samt oder ähnliche Stoffe in der Oberflächenstruktur beeinträchtigt.

Aus der DE-A-1 635 448 ist eine Vorrichtung zum Messen von Stoffbahnen bekannt, bei der ein im Meßbereich bogenförmig verlaufendes Meßband die Stoffbahn gegen eine Zugwalze drückt, so daß auch diese bekannte Vorrichtung zum Längenmessen oberflächenempfindlicher Bahnen nicht geeignet ist.

Ganz Entsprechendes gilt auch für die DE-A1-2 446 128. Bei dieser bekannten Vorrichtung zum Längenmessen von Stoffbahnen wird die Stoffbahn zwischen einer Zugwalze und dem Meßband geführt und somit ebenfalls einer Druckbelastung ausgesetzt. Darüber hinaus hat das Meßband die Form eines Zahnriemens, dessen Zähne auf die Zugwalze hinweisen. Bei oberflächenempfindlichen Stoffen wird sich das Zahnprofil des Meßbandes auf der Stoffbahn abbilden und somit deren Oberflächenstruktur beeinträchtigen.

Um eine eichfähige Bahnmessung zu erreichen, muß die Meßgenauigkeit der Vorrichtung vergleichsweise hoch sein und darf beispielsweise eine Toleranz von ± 3 ‰ nicht überschreiten. Wenn diese Meßgenauigkeit erzielt werden soll, muß auch der Schlupf zwischen der über den Meßtisch bewegten Bahn und dem Meßrad so klein wie möglich gehalten werden, was einen guten Kraftschluß verlangt. Nun kann aber die Anpreßkraft der Gegendruckwalze bzw. des Gegendruckbandes nicht beliebig hoch gewählt werden, weil hierdurch das Aussehen und die Qualität von Bahnen mit empfindlicher Oberfläche in unerwünschter Weise beeinträchtigt würde, insbesondere beim Messen von Textilbahnen aus Plüsch, Flor, Samt oder ähnlichem, deren Oberflächenstruktur geschont werden muß.

In der DE-C-2 529 476 wird daher vorgeschlagen, daß dem Meßrad gegenüberliegend die Düse eines Gebläses angeordnet ist, deren Luftstrom auf die dem Meßrad gegenüberliegende Oberfläche der Bahn gerichtet ist. Dadurch wird eine gute kraftschlüssige Verbindung zwischen den Bahnen und dem Meßrad gewährleistet. Bei dieser Art der Messung wird jedoch Meßgut mit velourartiger Oberfläche wie Samt, Plüsch, Cord oder Frottierstoffe ausgeschlossen, da diese beidseitig strukturierte Oberflächen aufweisen, so daß in einem solchen Fall wegen der strukturierten Auflagefläche und der daraus resultierenden punktförmigen Berührungen mit der Auflage ein gewisser Schlupf auftreten kann.

Der Erfindung liegt die Aufgabe zugrunde, eine Vorrichtung gemäß Oberbegriff des Anspruchs 1 zu schaffen, die bei größter Schonung des Meßgutes eine sehr genaue Messung erlaubt.

Diese Aufgabe wird mit Hilfe der kennzeichnenden Merkmale des Anspruchs 1 gelöst.

Vorteilhafte Weiterbildungen ergeben sich aus den Unteransprüchen.

Durch diese Art der Messung sind die oben erwähnten Beschränkungen bedeutungslos.

Die Erfindung wird nachfolgend anhand eines in der Zeichnungsfigur dargestellten Beispiels beschrieben. Über eine Walze 10 sowie geeignete Umlenk- und Führungsrollen 11 bis 17 wird das Meßgut vom Stapel oder von der Rolle abgezogen und zu einer Bevorratungsmulde 18 transportiert, wo es in lockerer Form vorübergehend zwischengespeichert wird. Über eine Ausstreifwalze 19, eine Klopfwalze 20 und eine Transportwalze 21 wird das Meßgut aus der Bevorratungsmulde 18 abgezogen und über eine Tänzerrolle 22 dem Meßband 23 zugeführt. Durch die Tänzerrolle 22 ist gewährleistet, daß das Meßgut stets in lockerer Form auf das Meßband 23 aufgelegt wird, so daß Verspannungen vermieden werden.

Das Meßband 23 wird zwischen zwei Umlenkrollen 24 und 25 geführt und verläuft über eine hinreichend weite Strecke in einer Ebene.

Im Anschluß an das Meßband 23 wird das Meßgut über Umlenkwalzen 26 und 27 einer Beschaufläche 28 zugeführt, auf der während des laufenden Meßvorganges die Qualität des Meßgutes überprüft werden kann. Im Anschluß an die Beschaufläche 28 ist wiederum eine Tänzerrolle 29 vorgesehen, die für einen gleichmäßigen Zug des Meßgutes auch auf der Beschaufläche 28 sorgt. Eine sich an die Tänzerrolle anschließende Transportwalze 30 führt das Meßgut über starre Führungen bzw. drehende Walzen 31 und 32 sowie eine weitere Tänzerwalze 33 einer das Meßgut aufnehmenden Rolle 34 zu. Die Tänzerrolle 33 hat dabei die Aufgabe, für eine lockere Aufwicklung des Meßgutes zu sorgen.

Der Anlauf des Meßgutes erfolgt aus der Nullstellung und kann in etwa 10 sec auf die voreingestellte Geschwindigkeit hochlaufen. Ein Kantensteuergerät gewährleistet, daß das Meßgut stets gleichmäßig und in Richtung des Meßbandes geführt wird.

Die Vorrichtung kann zum Messen und Aufrollen von fester, wenig dehnbarer bis sehr stark dehnbarer Web- und Wirkware in den K-Gruppen I, II, III und IV verwendet werden. Der Dickenbereich des Meßgutes ist praktisch unbegrenzt. Das Meßband ist mit einem kurzen, griffigen, borstenartigen Belag versehen, um einen Schlupf zwischen Meßband und Meßgut zu verhindern. Das Zählwerk hat einen Anzeigebereich von 0 bis 999,99 m. Diese Weglängen ergeben sich durch entsprechende Über- bzw. Untersetzungen aus der Drehzahl der Meßrolle 25. Es hat sich als vorteilhaft erwiesen, die Zentimeter auf einer rundlaufenden Skala vorzusehen. Das Druckwerk ist so eingestellt, daß lediglich volle Dezimeter ausgedruckt werden. Die Übertragung der Meßwerte zwischen Meßrad und Zählwerk erfolgt entweder über zwischengeschaltete Getriebe und/oder eine Kette. Das Druck- und Zählwerk, die Gegengewichte der Tänzerwalzen sowie die Meßmarken « Anfang » und « Ende » der Messung sowie das Typenschild mit Eichstempel sind durch eichtechnische Sicherungen gegen Austausch und Veränderungen gesichert.

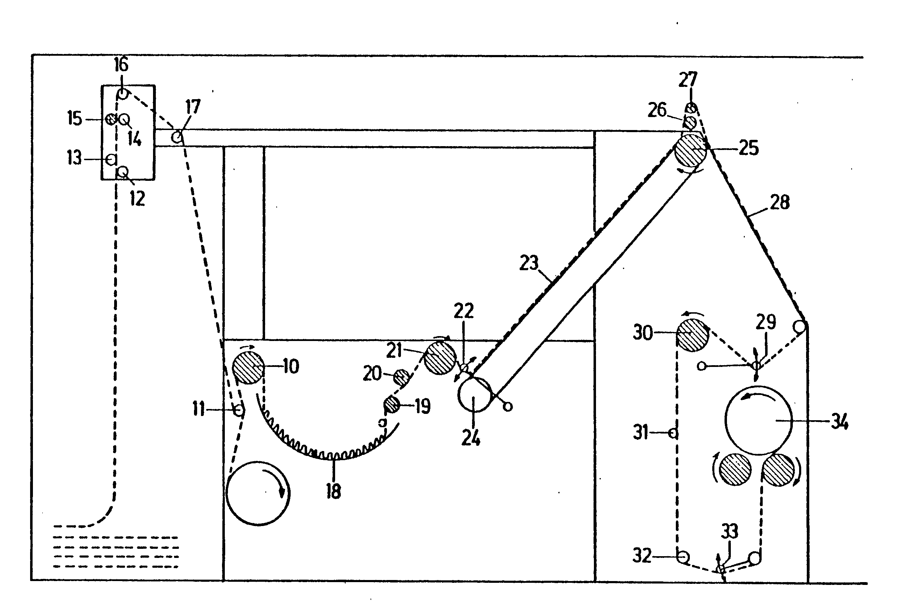

### Patentansprüche

1. Vorrichtung zum kontinuierlichen Längenmessen von Bahnen aus Textil, Papier, Kunststoff oder ähnlichem, bei der mit der Längsbewegung der Bahn zugleich eine mit einem Zählwerk verbundene Meßeinrichtung angetrieben wird, wobei die Meßeinrichtung ein ähnlich einem Transportband über zwei Umlenkrollen (24, 25) und zwischen diesen Umlenkrollen (24, 25) über eine hinreichend lange Strecke in einer Ebene geführtes Meßband (23) mit griffiger Oberfläche sowie zumindest eine Meßrolle (25) zum Erfassen der Bewegung des Meßbandes (23) aufweist, dadurch gekennzeichnet, daß das Meßband (23) im Berührungsabschnitt mit der zu messenden Bahn in der einen Ebene geführt ist.

2. Vorrichtung nach Anspruch 1, dadurch gekennzeichnet, daß zumindest eine Umlenkrolle (24, 25) gleichzeitig als Meßrolle ausgebildet ist.

3. Vorrichtung nach Anspruch 1 oder 2, dadurch gekennzeichnet, daß die Meßrollen formschlüssig mit dem Meßband (23) verbunden sind.

4. Vorrichtung nach einem der Ansprüche 1 bis 3, dadurch gekennzeichnet, daß zur gleichmäßigen Spannung des Meßgutes zu Beginn des Meßbandes (23) eine erste Tänzerrolle (22) vorhanden ist.

5. Vorrichtung nach einem der Ansprüche 1 bis 4, dadurch gekennzeichnet, daß am Ende des Meßbandes (23) eine zweite Tänzerrolle (29) angeordnet ist.

6. Vorrichtung nach einem der Ansprüche 1 bis 5, dadurch gekennzeichnet, daß im Anschluß an das Meßband (23) zwischen diesem und zweiter Tänzerrolle (29) eine Beschaufläche (28) vorhanden ist.

7. Vorrichtung nach einem der Ansprüche 1 bis 6, dadurch gekennzeichnet, daß das Meßband (23) mit einem kurzen, borstenartigen Belag versehen ist.

### Claims

1. Device for continuous length measurement of webs of textile, paper, plastic and the like, in which a measuring, device linked to a meter is driven along with the lengthwise movement of the web, the measuring device having a measuring tape (23) with a gripping surface, this tape being fed like a conveyor belt over two guide rollers (24, 25) and in a straight line for a sufficient distance between these guide rollers (24, 25) to record, together with a measuring roller (25), the movement of the measuring tape (23), wherein the measuring tape is guided on one level over the section of contact with the measured web.

2. Device according to claim 1, wherein at least one of the guide rollers (24, 25) is at the same time designed as a measuring roller.

3. Device according to claim 1 or 2, wherein the measuring rollers engage positively with the measuring tape (23).

4. Device according to any of claims 1 to 3, wherein an initial compensating roller (22) is provided at the start of the measuring tape (23) for even tensioning of the measured material.

5. Device according to any of claims 1 to 4, wherein a second compensating roller (29) is fitted at the end of the measuring. tape (23).

6. Device according to any of claims 1 to 5, wherein an inspection area (28) is provided after the measuring tape (23), between the latter and the second compensating roller (29).

7. Device according to any of claims 1 to 6, wherein the measuring tape (23) is provided with a short, bristle-type covering.

### Revendications

1. Dispositif de mesure continue de la longueur de bandes de textile, de papier, de matière synthétique ou similaires, où sont simultanément actionnés le mouvement d'avancement de la bande et un dispositif de mesure proprement dit, relié à un compteur, qui comprend d'une part, à l'instar d'une bande transporteuse, une bande mesureuse (23) passant dans un plan unique sur deux rouleaux de renvoi séparés par un entre-axe suffisant l'un de l'autre, et présentant une surface antidérapante et, d'autre part, au moins une roue mesureuse (25) enregistrant les mouvements de la bande mesureuse, caractérisé en ce que la bande mesureuse (23) est co-planaire avec la partie de bande en cours de mesure.

2. Dispositif selon la revendication 1, caractérisé en ce que au moins un des rouleaux de renvoi (24), (25) constitue simultanément la roue mesureuse.

3. Dispositif selon les revendications 1 et 2, caractérisé par un assemblage claboté entre les rouleaux de renvoi et la bande mesureuse.

4. Dispositif selon l'une des revendications 1 à 3, caractérisé par un rouleau compensateur (22) disposé avant la bande mesureuse, assurant une tension régulière de la marchandise à mesurer.

5. Dispositif selon l'une des revendications 1 à 4, caractérisé par un second rouleau compensateur (29) disposé à la suite de la bande mesureuse.

6. Dispositif selon l'une des revendications 1 à 5, caractérisé par une surface (28) destinée à l'inspection optique, prévue entre la bande mesureuse (23) et le rouleau compensateur (29).

7. Dispositif selon l'une des revendications 1 à 6, caractérisé en ce que la bande mesureuse est pourvue d'un revêtement poilu de faible hauteur.